# EUROPEAN PATENT APPLICATION

(11) **EP 4 822 215 A1**
(43) Date of publication of application: **14.10.2026**
(21) Application number: 24900436.7
(22) Date of filing: 20.11.2024
(51) Int. Cl.: F16H 25/20, F16H 25/22, F16H 25/24

(54) **SCREW SHAFT GUIDE UNIT AND BALL SCREW ACTUATOR**

(30) Priority: 05.12.2023 JP 2023205730
(71) Applicant: Oiles Corporation, Fujisawa-shi, Kanagawa, 252-0811 (JP)
(72) Inventor: YOSHIKAWA, Ryouji, Fujisawa-shi, Kanagawa 252-0811 (JP); OKUMURA, Kenichi, Fujisawa-shi, Kanagawa 252-0811 (JP)
(74) Representative: Strehl & Partner mbB
(86) International application number: PCT/JP2024/041121
(87) International publication number: WO 2025/121141

(57) **Abstract**

In an actuator operable to convert rotational motion from a motor or the like into linear motion, provided is reduced energy loss due to motion of a threaded shaft.

The two guide members (62) are disposed opposite to each other across the threaded shaft (30), and the guide surfaces (622) of the guide members are each pressed against the corresponding cylindrical sliding surface (34) on the outer circumference of the threaded shaft due to biasing by the corresponding O-ring (63), supporting the threaded shaft (30) to be rotatable about the axis O and to be movable in the Z-direction. The rotation-restricting member (64) has the flat rotation-restricting surface (644) and is fixed in the position where the clearance is provided between the flat abutting surface (33) on the outer circumference of threaded shaft and the rotation-restricting surface (644). While the abutting surface (33) and the rotation-restricting surface (644) interfere with each other upon arrival of rotation angle of the threaded shaft (30) about the axis O by the predetermined angle, thereby preventing the threaded shaft (30) from rotating further; non-contact state remains between the abutting surface (33) and the rotation-restricting surface (644) during the time when the rotation angle of the threaded shaft (30) about the axis O is less than the predetermined angle.

## Description

### Technical Field

The present invention relates to a structure of a threaded shaft guide unit having low energy loss, and configured to support a threaded shaft to be movable in a direction of an axis while restricting the threaded shaft from rotating about the axis, in an actuator for converting rotational motion from a motor or the like into linear motion, such as a ball screw actuator.

### Background Art

A steer-by-wire system or the like utilizes a motorized actuator in which a ball screw is configured to convert rotational motion from a motor into linear motion. For example, in a steer-by-wire type of steering device disclosed in patent Literature 1, a steering actuator includes a nut-rotating ball screw mechanism configured to convert rotational motion from an electric motor into linear motion of a steering shaft which is linked to a steering wheel via a tie rod and a knuckle arm, thereby driving the electric motor in accordance with the detected steering angle to turn the steering wheel.

In this steering actuator, in order to allow the steering shaft (corresponding to a threaded shaft of a ball screw mechanism) to be displaced in either direction of an axis thereof in response to rotation of a nut (corresponding to a nut of the ball screw mechanism) mounted to a steering housing, the steering shaft is slidably supported on an inner circumferential surface of a cylindrical bushing fitted in a groove formed circumferentially on an inner circumference of the steering housing and is prevented from rotating about the axis relative to the steering housing by the following structure.

For the steering housing, a rotation-preventing member receiving portion of a cylindrical shape with a bottom is provided at a position between the bushing and the nut, extending toward an outer circumferential surface of the steering shaft. Inside the rotation-preventing member receiving portion, a rotation-preventing member of a cylindrical shape is fitted while allowed to be movable toward the outer circumferential surface of the steering shaft. Additionally, a spring is located in a compressed state between the bottom of the rotation-preventing member receiving portion and the rotation-preventing member so as to resiliently bias the rotation-preventing member toward the steering shaft, thereby pressing an end face of the rotation-preventing member against the outer circumferential surface of the steering shaft.

In the end face (a surface pressed against the outer circumferential surface of the steering shaft) of the rotation-preventing member, a V-shaped groove is formed along the direction of the axis of the steering shaft, allowing the outer circumferential surface of the steering shaft to be fitted therein. Meanwhile, in the outer circumferential surface of the steering shaft fitted in the V-shaped groove in the end face of the rotation-preventing member, two inclined surfaces (two inclined surfaces facing respective inner wall surfaces on both sides of the V-shaped groove) are formed along the axis of the steering shaft so as to narrow a spacing between the two inclined surfaces toward a groove bottom of the V-shaped groove. Due to biasing by the spring in the compressed state, the inner wall surfaces on both sides of the V-shaped groove in the end face of the rotation-preventing member and the two inclined surfaces on an outer circumference of the steering shaft are in slidable surface contact with each other; whereby the rotation-preventing member guides the steering shaft during movement in interlocking relation with rotation of the nut while preventing rotation of the steering shaft about the axis relative to the steering housing.

### Citation List

### Patent Literature

Patent Literature 1: Japanese Granted Patent Publication No. 7208381

### Summary of Invention

### Technical Problem

In the above known steering actuator, the spring in the compressed state keeps pressing the rotation-preventing member against the steering shaft constantly, large friction is generated between a contact surface of the rotation-preventing member and that of the steering shaft (between each of the inner wall surfaces of the V-shaped groove of the rotation-preventing member and the facing inclined surface in the outer circumference of the steering shaft); this could increase energy loss due to the motion of the threaded shaft.

The present invention has been made taking the above situation into consideration, and an object of the present invention is to provide reduced energy loss due to motion of a threaded shaft in an actuator configured to convert rotational motion of a nut driven by a motor or the like into linear motion of the threaded shaft.

### Solution to Problem

In response to the above issue, according to the present invention, a guide surface of a guide member made of resin supports a threaded shaft movable in interlocking relation with rotation of a nut, allowing the threaded shaft to be rotatable about an axis of the threaded shaft and to be movable in a direction of the axis; and a rotation-restricting surface is arranged so as to define a clearance with respect to an outer circumference of the threaded shaft, whereby an interference occurring between the rotation-restricting surface and the outer circumference of the threaded shaft restricts the threaded shaft from rotating about the axis beyond a rotation angle according to a thickness of the clearance.

For example, the present invention provides a threaded shaft guide unit configured to support a threaded shaft in an actuator configured to convert rotational motion of a nut into linear motion of the threaded shaft, and the threaded shaft guide unit includes the following:
a guide housing configured to allow the threaded shaft to be inserted into the guide housing in a direction of an axis of the threaded shaft, the threaded shaft including, on an outer circumference of the threaded shaft, sliding surfaces each having a cylindrical surface shape and an abutting surface having a surface shape different from the sliding surfaces;
two guide members made of resin and including guide surfaces each configured to be in contact with a corresponding one of the sliding surfaces of the threaded shaft, the two guide members being disposed opposite to each other across the axis in the guide housing so that the guide surfaces support the threaded shaft to be rotatable about the axis and to be movable in the direction of the axis; and
rotation-restricting means comprising a rotation-restricting surface, the rotation-restricting surface being configured to be disposed facing the abutting surface of the threaded shaft with a clearance between the abutting surface and the rotation-restricting surface and to come into contact with the abutting surface of the threaded shaft upon rotation of the threaded shaft about the axis by a predetermined rotation angle defined by a thickness of the clearance, the rotation-restricting means being configured to restrict the threaded shaft from rotating beyond the predetermined rotation angle by contact occurring between the rotation-restricting surface and the abutting surface of the threaded shaft.

Further, the present invention provides a ball screw actuator and the ball screw actuator includes the following:
the threaded shaft guide unit above; and
a ball screw comprising the nut and the threaded shaft, the ball screw being configured to convert the rotational motion of the nut into the linear motion of the threaded shaft, the threaded shaft having the sliding surfaces and the abutting surface on the outer circumference of the threaded shaft and being supported by the guide surfaces of the two guide members to be rotatable about the axis and to be movable in the direction of the axis in a state in which the clearance is provided between the abutting surface and the rotation-restricting surface.

### Advantageous Effects of Invention

According to the present invention, the clearance is provided between the rotation-restricting surface configured to restrict rotation of the threaded shaft about the axis by interference with the outer circumference of the threaded shaft and the outer circumference of the threaded shaft; therefore, during the time when rotation of the threaded shaft about the axis remains less than the predetermined angle, non-contact state remains between the outer circumference of the threaded shaft and the rotation-restricting surface. This provides reduced energy loss due to reciprocating motion of the threaded shaft.

The guide member holds the threaded shaft while allowing the threaded shaft to be rotatable about the axis and has no function of preventing the threaded shaft from rotating about the axis, resulting in a relatively low load received from the threaded shaft in either rotational direction. This allows the guide member to be made of synthetic resin having a low friction coefficient against the threaded shaft, eliminating the need to make the guide member of hard, high-friction material having higher durability than necessary. This provides further reduced energy loss due to reciprocating motion of the threaded shaft.

### Brief Description of Drawings

[Fig. 1] Fig. 1 is a cross sectional view illustrating a partial internal configuration of a ball screw actuator according to one embodiment of the present invention.
[Fig. 2] Fig. 2(A) is a view illustrating, at a disposed position of a ball screw guide unit, an internal configuration of the ball screw actuator according to one embodiment of the present invention, and Fig. 2(B) is an A-A cross sectional view of Fig. 2(A).
[Fig. 3] Fig. 3(A) is an external view of a guide housing; Fig. 3(B) to (D) are a front view, a right side view, and a bottom view, of a guide housing 61; and Figs. 3(E) to (F) are a B-B cross sectional view and a D-D cross sectional view of Fig. 3(C), respectively.
[Fig. 4] Figs. 4(A) to (D) are a front view, a right side view, a back view, and a bottom view, of a rotation-restricting member 64, respectively; and Fig. 4(E) is an E-E cross sectional view of Fig. 4 (A).
[Fig. 5] Figs. 5(A) to (D) are a front view, a bottom view, a back view, and a right side view, of a guide member 62, respectively; Fig. 5(E) is an F-F cross sectional view of Fig. 5(A); and, Fig. 5(F) is a G-G cross sectional view of Fig. 5(A).
[Fig. 6] Fig. 6 is a view illustrating changes, according to rotation of the threaded shaft 30, in a positional relationship between an abutting surface of a threaded shaft 30 and a rotation-restricting surface 644 of the rotation-restricting member 64.
[Fig. 7] Fig. 7 is an explanation view illustrating another jointing method between the guide housing 61 and the rotation-restricting member 64.
[Fig. 8] Fig. 8 is a sectional view illustrating a modification example of the ball screw guide unit.

### Description the of Embodiments

In the following, one embodiment of the present invention will be described with reference to the drawings. The present embodiment exemplifies, as an actuator including a nut-rotating ball screw mechanism, a ball screw actuator applicable to a steering actuator for a steer-by-wire system.

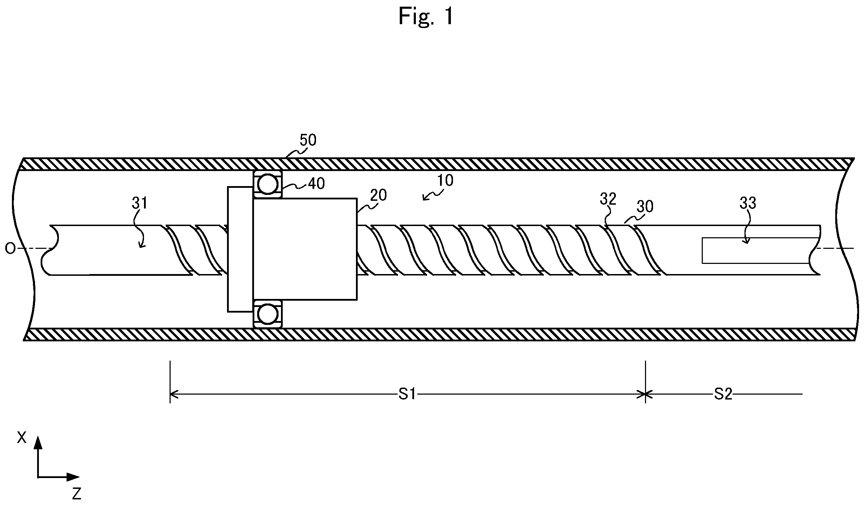

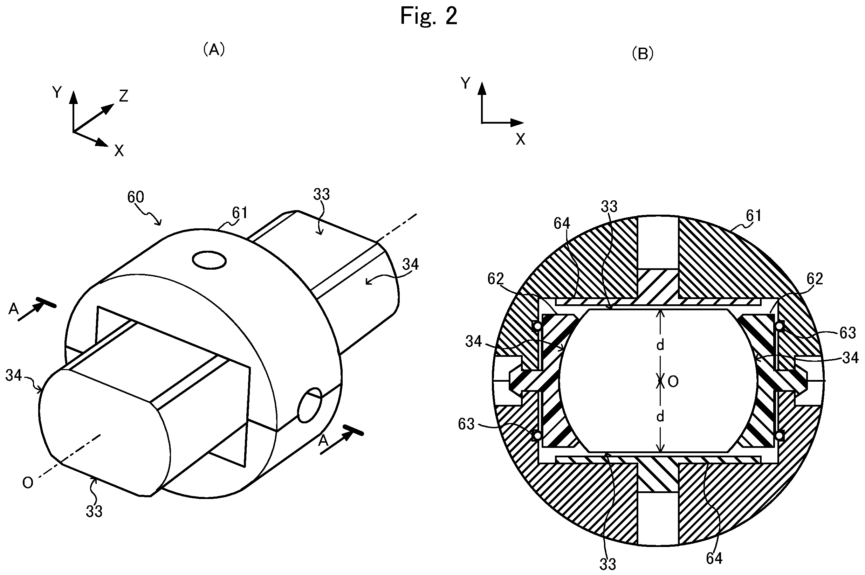

Fig. 1 is a cross sectional view illustrating a partial internal configuration of the ball screw actuator according to the present embodiment. Fig. 2(A) is a view illustrating, at a disposed position of a ball screw guide unit, an internal configuration of the ball screw actuator according to the present embodiment, and Fig. 2(B) is an A-A cross sectional view of Fig. 2(A). Fig. 1 and Fig. 2(A) each illustrate only a partial section of an elongated threaded shaft 30.

As illustrated in the figures, the ball screw actuator according to the present embodiment includes a nut-rotating ball screw mechanism 10, and the nut-rotating ball screw mechanism 10 includes a nut 20 rotatably supported by a housing 50 via a bearing 40; the threaded shaft 30 of cylindrical shape inserted in the nut 20; and balls (not shown) configured to recirculate in rolling grooves provided in an outer circumference 31 of the threaded shaft 30 and in an inner circumference of the nut 20; whereby rotation of the nut 20 about an axis O of the nut in both directions by a motor or the like causes the threaded shaft 30 to reciprocate in a direction of an axis O of the threaded shaft 30. The ball screw actuator further includes at least one ball screw guide unit 60 that is fitted in an inner circumference of the housing so as to be interposed between the inner circumference of the housing 50 and the outer circumference 31 of the threaded shaft 30.

For the convenience in the following explanation, three directions orthogonal to one another, which includes a Z-direction (along which the threaded shaft 30 is capable of reciprocating) along the axis O of the threaded shaft 30, are defined in an accommodation space for the ball screw actuator as an X-direction, a Y-direction, and the Z-direction; each view indicates these X-, Y-, and Z-directions as appropriate.

As illustrated in the figures, the threaded shaft 30 has a cylindrical shape, the outer circumference 31 of which is provided not only with a helical groove about an axis O of the threaded shaft 30 as the rolling groove 32 for the balls, but also with two flat surfaces 33 disposed opposite to each other across the axis O in a section S2 other than a section (hereafter referred to as a "rolling groove formation section") S1 in which the rolling groove 32 is formed, each of the two flat surfaces 33 having a Z-direction length determined by a maximum stroke of the threaded shaft 30. In the present embodiment, two flat surfaces parallel to an X-Z plane are formed as such two flat surfaces (hereafter referred to as "abutting surfaces") 33 at positions opposite to each other with respect to the axis O and at equal distances d from the axis O. Thus, the outer circumference 31 of the threaded shaft 30 includes two remaining cylindrical surface regions 34 disposed opposite to each other across the axis O between the two abutting surfaces 33. Guide surfaces 622 of two guide members 62 (to be described below) provided in the ball screw guide unit 60 are configured to be in slidable contact with the cylindrical surface regions (hereafter referred to as "sliding surfaces") 34, respectively, thereby supporting the threaded shaft 30 while allowing the threaded shaft 30 to be rotatable about the axis O and to be movable along the Z-direction.

Meanwhile, the ball screw guide unit 60 includes a guide housing 61 of hollow cylindrical shape fitted and fixed in the inner circumference of the housing 50 of the ball screw actuator; the two guide members 62 made of resin disposed opposite to each other in the guide housing 61 and configured to support the threaded shaft 30 to be rotatable about the axis O and to be movable in the Z-direction, and an O-ring 63 interposed between the guide housing 61 and at least one of the two guide members 62 (in the present embodiment, between the guide housing 61 and each of the guide members 62) and configured to bias the corresponding guide member 62 toward the axis O of the threaded shaft 30 in the X-direction. Further, for the purpose of restricting the threaded shaft 30 from rotating about the axis O in interlocking relation with rotation of the nut 20, two rotation-restricting members 64 are provided and disposed in the ball screw guide unit 60 so as to be opposite to each other.

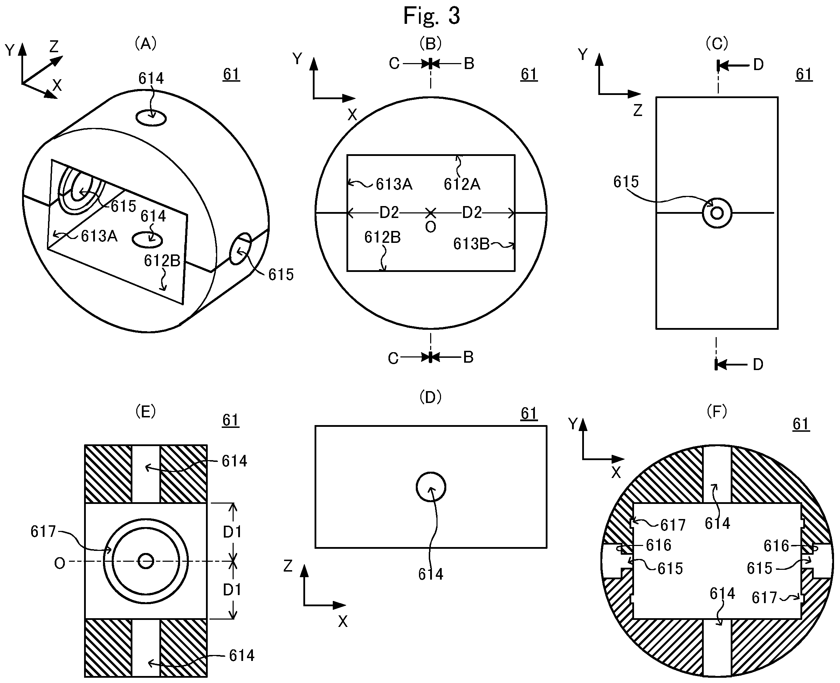

Fig. 3(A) is an external view of the guide housing 61; Fig. 3(B) to (D) are a front view, a right side view (symmetrical to a left side view), and a bottom view (symmetrical to a plan view), of the guide housing 61, respectively; and Fig. 3(E) to (F) are a B-B cross sectional view (symmetrical to a C-C cross sectional view) of Fig. 3(B) and a D-D cross sectional view of Fig. 3(C), respectively.

As illustrated in the figures, the guide housing 61 is a block having a hollow cylindrical shape configured to receive the threaded shaft 30 to be inserted therein along the Z-direction. The threaded shaft 30 is supported by the two guide members 62 in axial alignment with the guide housing 61, and therefore an axis of the guide housing 61 is similarly referred to as the axis O. The guide housing 61 includes an inner surface defining two pairs of inner wall surfaces disposed oppose each other across the axis O: namely two inner wall surfaces (hereafter referred to as "rotation-restricting member mounting surfaces") 612A, 612B on which the rotation-restricting members 64 are to be arranged and two inner surfaces (hereafter referred to as "guide member mounting surfaces") 613A, 613B on which the guide members 62 are to be arranged.

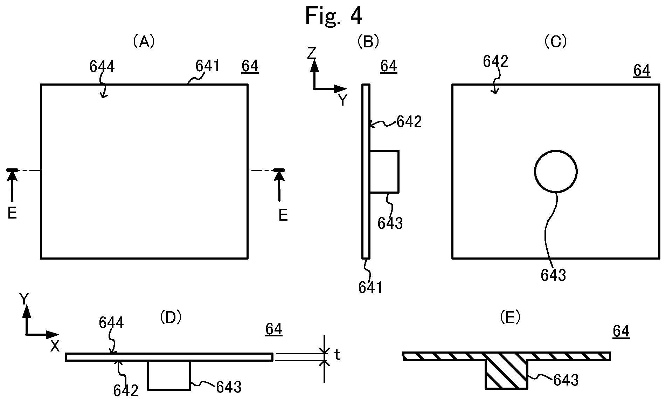

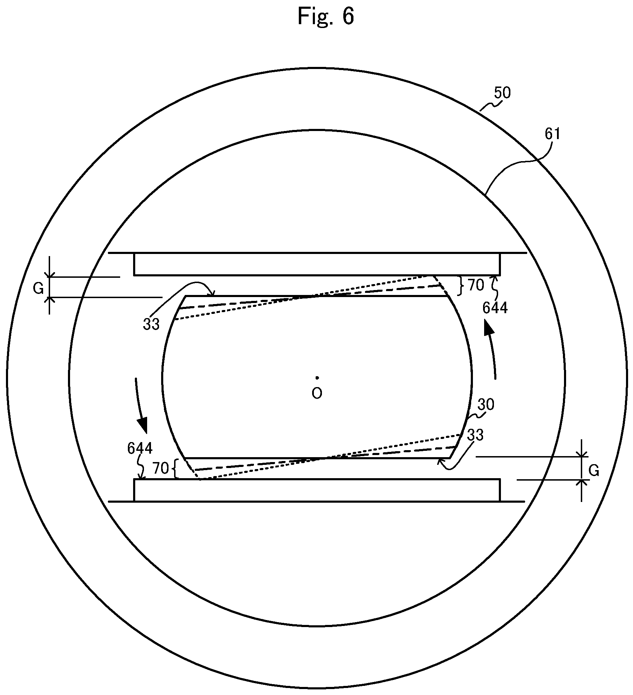

The two rotation-restricting member mounting surfaces 612A, 612B are flat surfaces disposed along the X-Z plane so as to be parallel to each other, and are formed at positions opposite to each other across the axis O and at equal distances D1 from the axis O. The distance D1 between the axis O and each of the rotation-restricting member mounting surfaces 612A, 612B is designed to be larger than a sum of the distance d between the axis O and the abutting surface 33 of the threaded shaft 30 and a plate thickness t (see Fig. 4) of a plate 641 (to be described below) included in the rotation-restricting member 64, thus providing a clearance 70 of a predetermined thickness G (see Fig. 6) between a rotation-restricting surface 644 (to be described below) of the plate 641 included in the rotation-restricting member 64 disposed on the corresponding rotation-restricting member mounting surface 612A, 612B and each of the abutting surfaces 33 of the threaded shaft 30.

For each of the two rotation-restricting member mounting surfaces 612A, 612B, a through hole (hereafter referred to as a "boss press-fit hole") 614 for press-fitting a boss 643 (to be described below) provided on the corresponding rotation-restricting member 64 is formed through the rotation-restricting member mounting surface 612A, 612B at a substantially central position thereof. Meanwhile, the two guide member mounting surfaces 613A, 613B, which are flat surfaces parallel to each other and disposed along a Y-Z plane, are formed at positions opposite to each other across the axis O and at equal distances D2 from the axis O. The distance (2×D2) between the guide member mounting surfaces 613A, 613B is designed to be larger than the diameter of the threaded shaft 30.

For the two guide member mounting surfaces 613A, 613B, a stepped through hole (hereafter referred to as a "snap-fit insertion hole") 615 for inserting a snap-fit insertion portion 624 (to be described below) provided on the corresponding guide member 62 is formed through the guide member mounting surface 613A, 613B at a substantially central position thereof. Each of the snap-fit insertion holes 615 includes two sections having different inner diameters and consecutively arranged along the X-direction, namely, a first section opening at the corresponding guide member mounting surface 613A, 613B and a second section having a diameter larger than that of the first section and disposed closer to an outer circumference of the guide housing 61 than the first section is, thereby allowing a latch 624B (to be described below) provided on the snap-fit insertion portion 624 of the corresponding guide member 62 to engage with a step surface 616 formed between an inner circumferential surface of the first section and an inner circumferential surface of the second section.

At least one of the two guide member mounting surfaces 613A, 613B defines a circumferential O-ring mounting groove 617 which surrounds the snap-fit insertion hole 615 and allows the O-ring 63 to be mounted therein. In the present embodiment, the two guide member mounting surfaces 613A, 613B define the respective circumferential O-ring mounting grooves 617 such that each O-ring 63 biases a corresponding one of the two guide members 62.

The guide housing 61 having such a form may be formed as an assembly of two semi-cylindrical parts symmetrical to each other, for example.

Each O-ring 63 has a cross-section diameter lager than a sum of the following: the thickness of the clearance generated between the corresponding guide member mounting surface 613A, 613B and a back surface 623 of the corresponding guide member 62, and a groove depth of the corresponding O-ring mounting groove 617. This causes each O-ring 63 to be compressed between the back surface of the corresponding guide member 62 and a groove bottom surface of the corresponding O-ring mounting groove 617, whereby each O-ring 63 in a compressed state biases the corresponding guide member 62 toward the corresponding sliding surface 34 of the threaded shaft 30 in the X-direction.

The present embodiment uses the O-rings 63 each interposed between the guide housing 61 and the corresponding guide member 62 so that each of the guide members 62 can be biased toward the sliding surfaces 34 of the threaded shaft 30 in the X-direction, but not limited to thereto; other types of elastic member may be used as an alternative to the O-ring 63. For example, an elastic member non-circular shape in section, such as X-ring, D-ring, or T-ring is applicable. Plate-shaped elastic members made of elastomer with rubber elasticity, such as urethane rubber or silicone rubber, may be arranged in an appropriate layout, for example, around the snap-fit insertion hole 615 at equal angular intervals.

Figs. 4(A) to (D) are a front view, a right side view (symmetrical to a left side view), a back view, and a bottom view (symmetrical to a plan view), of the rotation-restricting members 64; and Fig. 4(E) is an E-E cross sectional view of Fig. 4 (A).

As illustrated in the figures, each of the rotation-restricting members 64 is, for example, made of material having high durability and abrasion resistance, such as iron, a composite material, or a sintered alloy, and includes the plate 641 and the boss 643 provided on the plate 641 so as to protrude from one surface (a back surface) 642 of the plate 641 in the Y-direction. Another surface of the plate 641 (a surface opposite to the back surface, which is hereafter referred to as a "front surface") includes the rotation-restricting surface 644 configured to restrict rotation of the threaded shaft 30 about the axis O. An outer diameter of the boss 643 is designed to be larger than an inner diameter of the boss press-fit hole 614 of the guide housing 61 by a predetermined interference amount. The two rotation-restricting members 64 are each fixed to the guide housing 61 through a press-fitting of the boss 643 into the corresponding boss press-fit hole 614 until the entire back surface 642 of the plate 641 comes into contact with the corresponding rotation-restricting member mounting surface 612A, 612B of the guide housing 61. To make a gap between the rotation-restricting surfaces 644 of the plates 641 of the two rotation-restricting members 64 larger than a width across flats (a distance between the two abutting surfaces 33) of the threaded shaft 30 in this state, the plate 641 has the plate thickness t smaller than a difference (D1-d) between the distance D1 in the guide housing 61 from the axis O to the rotation-restricting member mounting surface 612A, 612B and the distance d in the threaded shaft 30 from the axis O to the abutting surface 33. This creates the clearance 70 (see Fig. 6) of the predetermined thickness G (D1-d-t) between the rotation-restricting surface 644 of each of the two rotation-restricting members 64 fixed to the guide housing 61 and a corresponding one of the two abutting surfaces 33 of the threaded shaft 30 supported by the two guide members 62.

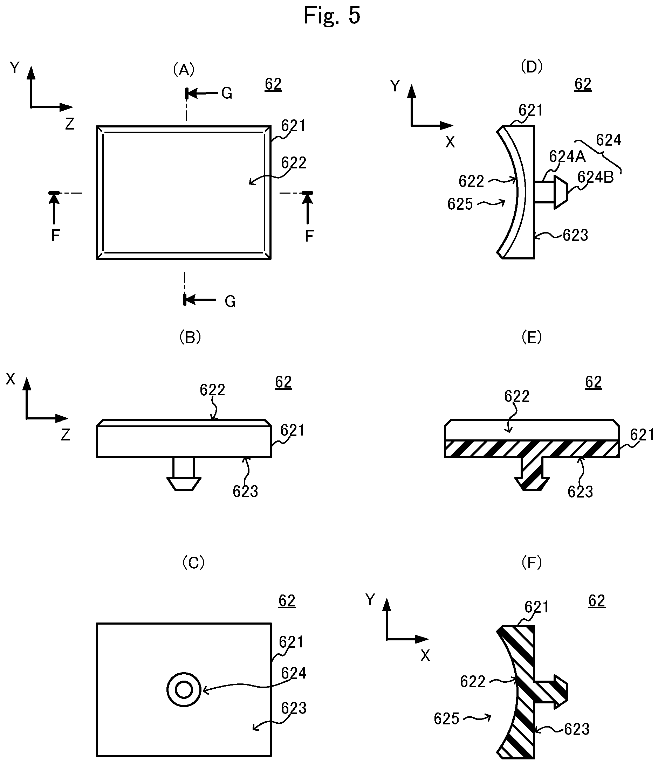

Figs. 5(A) to (D) are a front view, a bottom view, a back view (symmetrical to a plan view), and a right side view (symmetrical to a left side view), of the guide member 62, respectively; Fig. 5(E) is an F-F cross sectional view of Fig. 5(A); and Fig. 5(F) is a G-G cross sectional view of Fig. 5(A).

As illustrated in the figures, the guide member 62 includes a guide body 621 and the snap-fit insertion portion 624 provided on the guide body 621 and protruding from one surface (the back surface) 623 of the guide body 62 in the X-direction. The guide member 62 thus configured may be integrally made of resin with high sliding properties, such as polyethylene terephthalate, polybutylene terephthalate, polyamide, polyphenylene sulfide, or polyacetal, which may be reinforced with fibers, including, not limited to, glass.

The snap-fit insertion portion 624 includes a cylindrical portion 624A protruding from the back surface 623 of the guide body 621 and the latch 624B provided on an end face of the cylindrical portion 624A. The cylindrical portion 624A has an outer diameter smaller than the inner diameter of the first section of the snap-fit insertion hole 615 so as to be disposed in the first section. Additionally, the cylindrical portion 624A has a length (a distance between the back surface 623 of the corresponding guide member 62 and the end face of the cylindrical portion 624A) longer than a length of the first section within the snap-fit insertion hole 615 in the corresponding guide member mounting surface 613A, 613B. Meanwhile, the latch 624B has a maximum diameter greater than the inner diameter of the first section in the snap-fit insertion hole 615 and smaller than the inner diameter of the second section, and has a shape (for example, a conical shape or a frustoconical shape) tapered such that it becomes smaller than the first section of the snap-fit insertion hole 615 at a distal end.

By insertion of the snap-fit insertion portion 624 thus configured into the snap-fit insertion hole 615 of the corresponding guide member mounting surface 613A, 613B, the latch 624B passes through the first section while being elastically deformed due to contact with the inner circumferential surface of the first section, and is then accommodated in the second section in a state of being returned to its original shape, engaging the step surface 616 formed at a boundary between the first section and second section. Each of the guide members 62 is elastically supported by the O-ring 63 on the corresponding guide member mounting surfaces 613A, 613B while being movable by a distance corresponding to a difference between the length of the first section in the corresponding snap-fit insertion hole 615 and the length of the cylindrical portion 624A.

Another surface (a surface on a side opposite to the back surface: a "front surface") of the guide body 621 defines a guide groove 625 extending in the Z-direction to receive the outer circumference 31 of the threaded shaft 30 therein. The guide groove 625 has an inner wall defining the guide surface 622, the guide surface 622 being curved and configured to support the sliding surface 34 of the threaded shaft 30 to be slidable. The guide groove 625 may have an opposite shape to a corresponding one of the sliding surfaces 34 of the threaded shaft 30 so as to be in slidable surface contact with the corresponding one of the sliding surfaces 34 of the threaded shaft 30 or may include two cylindrical surface regions (cylindrical surface regions each having a diameter greater than that of the threaded shaft 30) configured to be in line contact with the corresponding one of the sliding surfaces 34 of the threaded shaft 30 at positions symmetrical to each other with respect to the X-Z plane containing the axis O. The guide groove 625 may be a V-shaped groove formed extending in the Z-direction, and inner wall surfaces (two side walls facing each other) thereof may define respective flat guide surfaces, each configured to be in line contact with the corresponding one of the sliding surfaces 34 of the threaded shaft 30 at positions symmetrical to each other with respect to the X-Z plane containing the axis O.

In such a configuration, the threaded shaft 30 is rotatably supported so as to be movable in the Z-direction in a state of being restricted from rotating about the axis O beyond a predetermined angle, as described below.

Fig. 6 is a view illustrating changes in a positional relationship between the abutting surface 33 of the threaded shaft 30 and the rotation-restricting surface 644 of the rotation-restricting member 64 according to rotation of the threaded shaft 30.

While omitted in Fig. 6, the guide surfaces 622 of the two guide members 62 disposed opposite to each other across the threaded shaft 30 are each configured to be pressed against a corresponding one of the sliding surfaces 34 of the threaded shaft 30 due to biasing by the corresponding O-ring 63, thereby supporting the threaded shaft 30 to be rotatable about the axis O and to be movable in the Z-direction.

The clearance 70 is formed between the rotation-restricting surface 644 of each of the two rotation-restricting members 64 disposed opposite to each other across the threaded shaft 30 and the corresponding one of the abutting surfaces 33 of the threaded shaft 30.

While, as described above, the threaded shaft 30 is supported by the guide surfaces 622 of the two guide members 62 for rotation about the axis O, the threaded shaft 30, upon rotating about the axis O by the predetermined angle defined by the thickness G of the clearance 70 as indicated by dotted lines in Fig. 6, is restricted from rotating further about the axis O due to interference occurring between the abutting surface 33 of the threaded shaft 30 and the rotation-restricting surface 644 of the corresponding rotation-restricting member 64. This prevents the threaded shaft 30 from rotating beyond the predetermined angle when the threaded shaft 30 is subjected to large moment about the axis O due to rotation of the nut 20.

Meanwhile, as indicated by dash-dot lines in Fig. 6, when rotation angle of the threaded shaft 30 about the axis O remains less than the predetermined angle, there is no interference between either abutting surface 33 of the threaded shaft 30 and the rotation-restricting surface 644 of the corresponding rotation-restricting member 64. Accordingly, when the threaded shaft 30 is subject to relatively small moment about the axis O due to rotation of the nut 20, a non-contact state is maintained between each abutting surface 33 of the threaded shaft 30 and the rotation-restricting surface 644 of the corresponding rotation-restricting member 64, thereby providing further reduced energy loss due to reciprocating motion of the threaded shaft 30.

As described above, according to the present embodiment, since the clearances 70 are each formed between the abutting surface 33 of the threaded shaft 30 and the rotation-restricting surface 644 of the corresponding rotation-restricting member 64, the following occurs:
when the threaded shaft 30 is subjected to large moment about the axis O due to rotation of the nut 20, the threaded shaft 30 is restricted from rotating beyond the predetermined angle; and
when the rotation angle of the threaded shaft 30 about the axis O remains less than the predetermined angle, a non-contact state is maintained between each abutting surface 33 of the threaded shaft 30 and the rotation-restricting surface 644 of the corresponding rotation-restricting member 64 during movement of the threaded shaft 30, thereby providing reduced energy loss due to motion of the threaded shaft 30.

The guide surfaces 622 of the guide members 62 support the threaded shaft 30 to be rotatable about the axis O, but have no function of preventing rotation of the threaded shaft about the axis, resulting in relatively low load received from the threaded shaft 30 in either rotational direction. This allows the guide members 62 to be made of synthetic resin having a low friction coefficient against the threaded shaft 30, eliminating the need to make the guide member 62 of hard, high-friction material having higher durability than necessary. This provides further reduced energy loss due to reciprocating motion of the threaded shaft 30.

In the related art described above, since the clearance is provided between each inner wall surface of the rotation-preventing member receiving portion of the steering housing and the rotation-preventing member so as to serve as a space in which the rotation-restricting member is movable, the rotation-restricting member vibrates due to extension or contraction of the spring biasing the rotation-restricting member, resulting in a variation of a permissible range of rotation of the steering shaft about the axis. In contrast to this, the rotation-restricting members 64 according to the present embodiment are each fixed to the guide housing 61 with the entire bottom surface (the back surface of the plate 641) 642 of the rotation-restricting member 64 in close contact with the corresponding rotation-restricting member mounting surface 612A, 612B, thereby restricting vibration relative to the guide housing 61. Therefore, the present embodiment prevents a variation of a permissible range of rotation of the threaded shaft 30.

The present invention can include, but is not limited to, the above embodiment; it will be obvious to those skilled in the art that various changes or modifications may be made without departing from the scope of the invention.

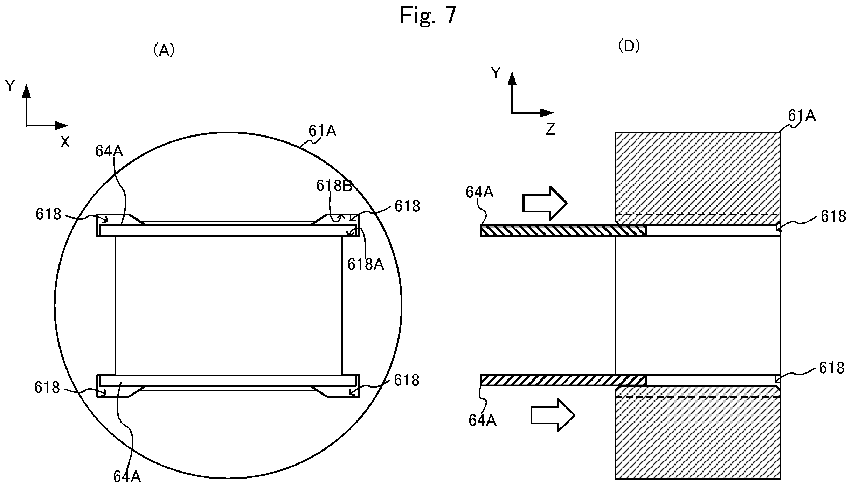

In the above embodiment, press-fitting of the boss 643 of the rotation-restricting member 64 into the boss press-fit hole 614 of the guide housing 61 causes the rotation-restricting member 64 to be joined to the guide housing 61; however, without being limited thereto, the rotation-restricting member 64 and the guide housing 61 may be joined to each other by another joining method. For example, as illustrated in Fig. 7, when rotation-restricting members 64A without the boss are used and each larger in width in the X-direction than the corresponding rotation-restricting member mounting surface 612A, 612B, slits 618 may be formed at respective border positions between the rotation-restricting member mounting surfaces 612A, 612B of a guide housing 61A and the guide member mounting surfaces 613A, 613B so as to be parallel to the rotation-restricting members 64A, thereby allowing both sides of each rotation-restricting member 64A to be inserted in the corresponding slits 618. In this case, the boss press-fit holes 614 may be omitted. For each of slits 618, the slit 618 has a thickness (a Y-direction width) larger than a plate thickness of the corresponding rotation-restricting member 64A, and two opposing wall surfaces 618A, 618B include one wall surface 618A oriented to the corresponding rotation-restricting member mounting surface 612A, 612B, a distance between the wall surface 618A and the corresponding rotation-restricting member mounting surface 612A, 612B being set to be slightly smaller than the plate thickness of the rotation-restricting member 64A. Accordingly, press-fitting in the Z-direction of both sides of the rotation-restricting member 64A into the two slits 618 disposed facing each other across the Y-Z plane containing the axis O causes the rotation-restricting member 64 to join to the guide housing 61A.

In the above embodiment, the rotation-restricting members 64, 64A having the rotation-restricting surface 644 are attached to the guide housing 61, 61A; however, without being limited thereto, as an alternative to using the rotation-restricting members 64, 64A, a pair of the opposing inner wall surfaces 612A, 612B of the guide housing may be each provided with a rotation-restricting layer made of material having high durability and abrasion resistance, such as sintered metal layer or a metal coating layer, thereby allowing a surface of each rotation-restricting layer to act as the rotation-restricting surface.

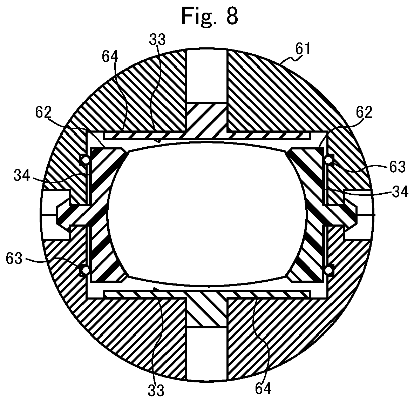

In the above embodiment, the flat surfaces are formed on the outer circumference 31 of the threaded shaft 30 as the abutting surfaces; however, each abutting surface is not limited to being flat and may be curved, as illustrated in Fig. 8, as long as it can interfere with the corresponding rotation-restricting surface 644 upon rotation of the threaded shaft 30 about the axis O by the predetermined angle. In this case, each of the rotation-restricting surfaces 644 may be flat or be curved following a shape of the corresponding abutting surface of the threaded shaft 30.

In the above embodiment, the two abutting surfaces 33 are each formed on the outer circumference 31 of the threaded shaft 30 so as to interfere with the corresponding rotation-restricting surface 644 upon rotation of the threaded shaft 30 about the axis O by the predetermined angle; however, it is sufficient that at least one abutting surface 33 thus configured is formed on the outer circumference 31 of the threaded shaft 30.

The above embodiment exemplifies the application to a ball screw actuator applicable as a steering actuator for a steer-by-wire system; however, the present invention is widely applicable, without being limited to the steering actuator for the steer-by-wire system, to any feed mechanism configured to convert rotational motion of a nut into linear motion of a threaded shaft, such as a nut-rotating ball screw mechanism.

### Reference Signs List

10: ball screw mechanism; 20: nut; 30: threaded shaft; 31: outer circumference of threaded shaft; 32: rolling groove; 33: abutting surface; 34: sliding surface; 40: bearing; 50: housing; 60: ball screw guide unit; 61, 61A: guide housing, 62: guide member; 63: O-ring; 64, 64A: rotation-restricting member; 70: clearance between rotation-restricting surface of rotation-restricting member and abutting surface of threaded shaft; 612A, 612B: rotation-restricting member mounting surface; 613A, 613B: guide member mounting surface: 614: boss press-fit hole; 615: snap-fit insertion hole; 616: step surface; 617: O-ring mounting groove; 618: slit; 621: guide member body; 622: guide surface; 623: back surface of guide member body; 624: snap-fit insertion portion 624A: cylindrical portion; 624B: latch; 625: guide groove; 641: plate; 642: back surface of plate; 643: boss; 644: rotation-restricting surface

## Claims

1. A threaded shaft guide unit configured to support a threaded shaft in an actuator configured to convert rotational motion of a nut into linear motion of the threaded shaft, the threaded shaft guide unit comprising:
a guide housing configured to allow the threaded shaft to be inserted into the guide housing in a direction of an axis of the threaded shaft, the threaded shaft including, on an outer circumference of the threaded shaft, sliding surfaces each having a cylindrical surface shape and an abutting surface having a surface shape different from the sliding surfaces;
two guide members made of resin and including guide surfaces each configured to be in contact with a corresponding one of the sliding surfaces of the threaded shaft, the guide members being disposed opposite to each other across the axis in the guide housing so that the guide surfaces support the threaded shaft to be rotatable about the axis and to be movable in the direction of the axis; and
rotation-restricting means comprising a rotation-restricting surface, the rotation-restricting surface being configured to be disposed facing the abutting surface of the threaded shaft with a clearance between the abutting surface and the rotation-restricting surface and to come into contact with the abutting surface of the threaded shaft upon rotation of the threaded shaft about the axis by a predetermined rotation angle defined by a thickness of the clearance, the rotation-restricting means being configured to restrict the threaded shaft from rotating beyond the predetermined rotation angle by contact occurring between the rotation-restricting surface and the abutting surface of the threaded shaft.

2. A threaded shaft guide unit according to claim 1,
wherein the rotation-restricting means comprises a rotation-restricting member including surfaces, one surface of the surfaces faces the abutting surface of the threaded shaft and includes the rotation-restricting surface, the other surface of the surfaces is disposed in an opposite side of the rotation-restricting member from the rotation-restricting surface, and the rotation-restricting member is fixed to the guide housing in a state in which the other surface is in surface-contact with the guide housing.

3. A threaded shaft guide unit according to claim 1,
wherein the rotation-restricting means comprises a rotation-restricting layer formed on an inner wall surface of the guide housing, the rotation-restricting layer comprises a surface facing the abutting surface of the threaded shaft, and the surface includes the rotation-restricting surface.

4. A ball screw actuator comprising:
the threaded shaft guide unit according to any one of claims 1 to 3; and
a ball screw comprising the nut and the threaded shaft, the ball screw being configured to convert the rotational motion of the nut into the linear motion of the threaded shaft, the threaded shaft having the sliding surfaces and the abutting surface on the outer circumference of the threaded shaft and being supported by the guide surfaces of the two guide members to be rotatable about the axis and to be movable in the direction of the axis in the state in which the clearance is provided between the abutting surface and the rotation-restricting surface.
